# EUROPÄISCHE PATENTSCHRIFT

(11) **EP 2 612 137 B1**
(45) Veröffentlichungstag und Bekanntmachung des Hinweises auf die Patenterteilung: **14.04.2021**
(21) Anmeldenummer: 11734096.8
(22) Anmeldetag: 20.07.2011
(51) Int. Cl.: G01N 27/406, G01N 27/419, G01K 7/26

(54) **VERFAHREN UND VORRICHTUNG ZUR ERFASSUNG MINDESTENS EINER EIGENSCHAFT EINES GASES**
METHOD AND APPARATUS FOR DETERMINING AT LEAST ONE CHARACTERISTIC OF A GAS
PROCÉDÉ ET DISPOSITIF POUR DÉTERMINER AU MOINS UNE PROPRIÉTÉ D'UN GAZ

(30) Priorität: 02.09.2010 DE 102010040146
(43) Veröffentlichungstag der Anmeldung: 10.07.2013
(73) Patentinhaber: Robert Bosch GmbH, 70442 Stuttgart (DE)
(72) Erfinder: LIEMERSDORF, Dirk, 74343 Sachsenheim (DE); SILLMANN, Benjamin, 70567 Moehringen (DE)
(86) Internationale Anmeldenummer: PCT/EP2011/062419
(87) Internationale Veröffentlichungsnummer: WO 2012/028380

(56) Entgegenhaltungen:
- EP-A2- 0 695 983
- DE-A1- 4 415 980
- DE-A1-102006 053 808
- US-A- 3 871 981
- US-A1- 2009 294 285

## Beschreibung

### Stand der Technik

Aus dem Stand der Technik sind zahlreiche Vorrichtungen und Verfahren zur Erfassung einer oder mehrerer Eigenschaften von Gasen in einem Messgasraum bekannt. Die Erfindung wird im Folgenden im Wesentlichen unter Bezugnahme auf Verfahren und Vorrichtungen beschrieben, welche zur quantitativen und/oder qualitativen Erfassung mindestens einer Gaskomponente in einem Messgasraum dienen. Beispielsweise kann es sich bei dem Gas um ein Abgas einer Brennkraftmaschine handeln, insbesondere im Kraftfahrzeugbereich, und bei dem Messgasraum beispielsweise um einen Abgastrakt. Alternativ oder zusätzlich können jedoch auch andere Eigenschaften des Gases erfasst werden, beispielsweise beliebige physikalische und/oder chemische Parameter des Gases, oder es kann sich um eine andere Art von Gas handeln.

Zahlreiche der bekannten Verfahren und Vorrichtungen basieren auf der Verwendung von elektrochemischen Sensorelementen, wie beispielsweise in DE102006053808 A1, EP0695983 A2, DE4415980 A1, US 3871981 A und US2009/294285 A1 offenbart. Insbesondere kann es sich dabei um elektrochemische Sensorelemente handeln, welche auf der Verwendung eines oder mehrerer Festelektrolyte basieren, also auf der Verwendung von Festkörpern, welche, zumindest oberhalb einer Mindesttemperatur, ionenleitende Eigenschaften, beispielsweise Sauerstoffionen-leitende Eigenschaften, aufweisen. Beispielsweise kann es sich hierbei um auf Zirkoniumdioxid-basierte Festelektrolyte handeln, beispielsweise Yttrium-stabilisiertes Zirkoniumdioxid (YSZ) und/oder Scandium-dotiertes Zirkoniumdioxid (ScSZ). Derartige Sensoren können beispielsweise zur Bestimmung einer Luftzahl eines Abgases eingesetzt werden. Beispiele derartiger Sensoren, welche auch als Lambdasonden bezeichnet werden, sind aus Robert Bosch GmbH: Sensoren im Kraftfahrzeug, Ausgabe 2007, Seiten 154-159 bekannt. Die dort dargestellten Sensoren können auch grundsätzlich im Rahmen der vorliegenden Erfindung eingesetzt und erfindungsgemäß modifiziert werden. Weiterhin können beispielsweise Sensoren zur Bestimmung eines Stickoxid (NOₓ)-Anteils verwendet werden. Derartige Sensoren sind beispielsweise in EP 0 769 693 A1, in DE 10 2008 040 314 A1 oder in WO 2010/003826 A1 beschrieben. Die in diesen Druckschriften dargestellten Vorrichtungen und Verfahren können auch grundsätzlich im Rahmen der vorliegenden Erfindung eingesetzt und erfindungsgemäß modifiziert bzw. verwendet werden.

In der Praxis hat sich dabei bei bekannten Verfahren und Vorrichtungen gezeigt, dass die mittels dieser Verfahren und Vorrichtungen ermittelten Messwerte, beispielsweise Messwerte einer selektiven Detektion einer oder mehrerer Gaskomponenten, stark von den Umgebungsbedingungen abhängig sein können. Insbesondere können die Messwerte von Störgrößen und Querempfindlichkeiten abhängen, was insbesondere bei einer quantitativen, selektiven Detektion einer oder mehrerer Gaskomponenten, wie beispielsweise O₂ und/oder NOₓ mit hoher Auflösung, insbesondere zum Einsatz als On-Board-Diagnose-Sensoren störend sein kann. Um eine geforderte Genauigkeit der Detektion (beispielsweise eine NOₓ-Detektion im einstelligen ppm-Bereich) zu erreichen, ist es daher in vielen Fällen notwendig, neben der reinen Sensitivität des Sensors ebenfalls eine oder mehrere oder alle auftretende Störgrößen und Querempfindlichkeiten zu minimieren. Insbesondere ist hier eine Temperaturabhängigkeit der Sensorsignale zu berücksichtigen. Im Stand der Technik wird daher in der Regel die Temperatur innerhalb des Sensorelements bestimmt und in der Regel eine Temperaturregelung auf eine Solltemperatur vorgenommen. Nach wie vor besteht jedoch ein erhebliches Verbesserungspotenzial bezüglich der Minimierung bzw. Berücksichtigung von Störeinflüssen, insbesondere auch der Temperatureinflüsse im gesamten Sensorelement.

### Offenbarung der Erfindung

Es werden daher ein Verfahren gemäß Anspruch 1 und eine Vorrichtung gemäß Anspruch 11 zur Erfassung mindestens einer Eigenschaft eines Gases in einem Messgasraum vorgeschlagen, welche die Nachteile bekannter Verfahren und Vorrichtungen zumindest weitgehend vermeiden. Wie oben dargestellt, kann es sich bei der mindestens einen Eigenschaft des Gases grundsätzlich um eine beliebige physikalisch und/oder chemisch nachweisbare Eigenschaft handeln. Insbesondere kann es sich dabei um eine Erfassung mindestens einer Gaskomponente des Gases handeln, also um eine qualitative und/oder quantitative Erfassung dieser Gaskomponente, beispielsweise einen prozentualen Anteil und/oder einen Partialdruck dieser Gaskomponente.

Bei dem vorgeschlagenen Verfahren wird die mindestens eine Eigenschaft unter Verwendung mindestens einer elektrochemischen Messzelle eines Sensorelements bestimmt. Unter einer elektrochemischen Messzelle ist dabei eine Messzelle zu verstehen, welche elektrochemische Eigenschaften ausnutzt, also beispielsweise eine Nernstzelle und/oder eine Pumpzelle. Insbesondere kann die mindestens eine Messzelle mindestens zwei Elektroden, beispielsweise mindestens zwei Nernst-Elektroden und/oder mindestens zwei Pumpelektroden, und mindestens einen die mindestens zwei Elektroden verbindenden Festelektrolyten, beispielsweise YSZ, ScSZ und/oder andere Arten von Festelektrolyten, umfassen. Diesbezüglich kann grundsätzlich auf sämtliche bekannte Sensorelemente verwiesen werden, welche auch im Rahmen der vorliegenden Erfindung grundsätzlich einsetzbar sind.

Weiterhin weist das Sensorelement zwei oder mehr Temperaturmesszellen auf. Unter einer Temperaturmesszelle ist dabei eine elektrochemische Zelle zu verstehen, welche, unter Verwendung elektrochemischer Eigenschaften und/oder Messprinzipien, eine Ermittlung einer Temperatur am Ort der Temperaturmesszelle ermöglicht. Insbesondere kann es sich bei den Temperaturmesszellen wiederum um Nernstzellen und/oder Pumpzellen handeln. Jede der Temperaturmesszellen weist mindestens zwei Elektroden sowie mindestens einen die Elektroden verbindenden Festelektrolyten auf. Aus einem Innenwiderstand, insbesondere einem Elektrolytinnenwiderstand, der Temperaturmesszellen wird auf eine Temperatur am Ort der jeweiligen Temperaturmesszelle geschlossen, da der Innenwiderstand in der Regel stark von der Temperatur der Temperaturmesszelle abhängig ist. Die Temperaturmesszellen können dabei ganz oder teilweise verschieden von der Messzelle ausgebildet sein, welche zur Bestimmung der mindestens einen Eigenschaft des Gases herangezogen wird. So können die Elektroden und/oder der Festelektrolyt der Temperaturmesszellen separat von den Elektroden und/oder dem Festelektrolyten der Messzelle ausgebildet sein. Alternativ oder zusätzlich können jedoch auch eine oder mehrere der Temperaturmesszellen ganz oder teilweise bauteilidentisch mit der Messzelle sein. Beispielsweise können sich eine oder mehrere der Temperaturmesszellen mindestens eine Elektrode mit der Messzelle zur Erfassung der Eigenschaft des Gases teilen. Alternativ oder zusätzlich kann auch der Festelektrolyt einer oder mehrerer der Temperaturmesszellen ganz oder teilweise bauteilidentisch mit dem Festelektrolyten der Messzelle ausgebildet sein. Verschiedene Ausgestaltungen sind möglich und werden unten im Rahmen verschiedener Ausführungsbeispiele noch näher erläutert.

Bei dem vorgeschlagenen Verfahren werden Temperaturen, also mindestens zwei Temperaturen, an mindestens zwei verschiedenen Orten des Sensorelements erfasst und bei der Bestimmung der mindestens einen Eigenschaft genutzt. Hierfür kann beispielsweise mindestens ein Temperaturmesselement vorgesehen sein. Beispielsweise kann es sich hierbei um die oben beschriebene mindestens eine optionale Temperaturmesszelle handeln, wovon im Folgenden, ohne Beschränkung weiterer möglicher Ausgestaltungen, ausgegangen wird. Beispielsweise kann es sich also bei den Temperaturen um Temperaturen am Ort der jeweiligen optionalen Temperaturmesszelle handeln. Alternativ oder zusätzlich können auch eine oder mehrere Temperaturen mittels mindestens einer anderen Art von Temperaturmesselement erfasst werden. Beispielsweise können eine oder mehrere Temperaturen in Form von mindestens einer Temperaturinformationseigenschaft mindestens eines Heizelements, beispielsweise mindestens eines Heizwiderstands, erfasst werden und optional genutzt werden. Diese Temperaturen werden bei der Bestimmung der mindestens einen Eigenschaft verwendet. Dies bedeutet, dass diese Temperaturen in irgendeiner Weise bei der Bestimmung der Eigenschaft berücksichtigt werden, beispielsweise zusätzlich zu den Messgrößen der Messzelle in einem Auswertungsalgorithmus und/oder indem eine Regelung der Temperatur am Ort der Messzelle erfolgt. Beispiele werden unten noch näher ausgeführt.

Allgemein sind unter einer "Temperatur" im Rahmen der vorliegenden Erfindung ein Parameter und/oder ein Messwert zu verstehen, aus welchem direkt oder indirekt auf eine Temperatur geschlossen werden kann. Beispielsweise kann es sich hierbei unmittelbar um eine Temperatur auf einer der dem Fachmann bekannten Temperaturskalen handeln. Alternativ oder zusätzlich kann es sich bei dieser Temperatur jedoch auch beispielsweise um eine Größe oder einen Parameter handeln, welcher mit einer Temperatur korreliert, beispielsweise einen einfachen digitalen und/oder analogen Messwert, welcher optional noch in eine Temperatur umgerechnet werden kann. Beispielsweise kann dementsprechend auch der Innenwiderstand und/oder ein zum Innenwiderstand einer Temperaturmesszelle korrelierender Wert als "Temperatur" bezeichnet werden, da aus diesem Innenwiderstand unter Ausnutzung bekannter Beziehungen zwischen dem Innenwiderstand und der Temperatur auf die Temperatur geschlossen werden kann. Verschiedene Ausgestaltungen sind möglich, so dass insgesamt der Begriff der "Temperatur" im Rahmen der vorliegenden Erfindung weit zu fassen ist und möglicherweise, jedoch nicht ausschließlich, tatsächliche Temperaturen auf üblichen Temperaturskalen umfassen kann, wie beispielsweise eine Temperatur in °C, °K, °F oder Ähnliches.

Das Verfahren kann insbesondere derart durchgeführt werden, dass aus den Temperaturen an den mindestens zwei verschiedenen Orten, beispielsweise an den Orten der Temperaturmesszellen, auf eine Temperatur am Ort der Messzelle geschlossen wird. Dies kann auf verschiedene Weisen erfolgen, beispielsweise indem ein oder mehrere bekannte Zusammenhänge zwischen den Temperaturen an den mindestens zwei verschiedenen Orten und der Temperatur am Ort der Messzelle verwendet werden. Beispielsweise kann es sich bei diesem mindestens einen Zusammenhang um eine Extrapolation und/oder eine Interpolation handeln, mittels derer aus den mindestens zwei Temperaturen auf die Temperatur am Ort der Messzelle geschlossen werden kann.

Die Temperatur am Ort der Messzelle kann auf verschiedene Weisen in die Bestimmung der mindestens einen Eigenschaft des Gases in dem Messgasraum einfließen. Beispielsweise kann eine Regelung dieser Temperatur erfolgen. Beispielsweise kann mittels mindestens eines Heizelements und der Temperatur am Ort der Messzelle und/oder einer oder mehreren der mittels der Temperaturmesszellen erfassten Temperaturen eine Regelung auf mindestens eine Solltemperatur erfolgen. Unter einer Solltemperatur kann dabei beispielsweise eine Solltemperatur am Ort der Messzelle verstanden werden. Dementsprechend können, da auch mehrere Messzellen vorliegen können, auch mehrere Solltemperaturen verwendet werden. Die Solltemperatur kann dabei ein fester Temperaturwert sein, kann jedoch grundsätzlich auch einen zeitlich variablen Solltemperaturverlauf umfassen.

Das Verfahren kann weiterhin derart durchgeführt werden, dass mittels der Messzelle mindestens eine Messgröße erfasst wird. Beispielsweise kann es sich hierbei um eine Nernstspannung und/oder einen Pumpstrom handeln. Alternativ oder zusätzlich sind jedoch auch andere Arten von Messgrößen erfassbar, je nach Messprinzip und/oder je nach zu erfassender Eigenschaft des Gases. Die mindestens eine Eigenschaft des Gases in dem Messgasraum kann dann aus der mindestens einen Messgröße unter Berücksichtigung einer Korrektur bestimmt werden, wobei die Korrektur abhängig ist von den Temperaturen, insbesondere Temperaturen am Ort der Temperaturmesszellen bzw. der anderen Arten von Temperaturmessvorrichtungen und/oder von einer Temperatur am Ort der Messzelle. Verschiedene Arten von Korrekturen sind möglich, beispielsweise indem für jede oder mehrere verschiedene Temperaturen andere Umrechnungen der Messgröße in die zu erfassende Eigenschaft verwendet werden und/oder indem eine oder mehrere Korrekturfunktionen verwendet werden. Derartige Ausgestaltungen sind dem Fachmann grundsätzlich bekannt.

Das Verfahren kann weiterhin derart durchgeführt werden, dass mittels mindestens eines Heizelements und den Temperaturen, beispielsweise den Temperaturen am Ort der Temperaturmesszellen, mindestens eine Regelung vorgenommen wird. Beispielsweise kann eine Regelung mindestens einer Temperatur des Sensorelements auf mindestens einen Kompromisstemperaturwert erfolgen. Der Kompromisstemperaturwert kann beispielsweise derart gewählt werden, dass für mehrere Orte des Sensorelements, vorzugsweise für mehrere Funktionszellen des Sensorelements (beispielsweise eine oder mehrere Nernstzellen und/oder eine oder mehrere Pumpzellen des Sensorelements) jeweils mindestens eine vorgegebene Abweichung von jeweiligen Solltemperaturen nicht überschritten wird. Als weiteres Beispiel kann eine Regelung auf die Messzelle durchgeführt werden, bei der die Messung zur Bestimmung der Eigenschaft des Gases die größte Temperaturquerempfindlichkeit besitzt.

Wie oben dargestellt, können die Temperaturmesszellen insbesondere ausgewählt sein aus Nernstzellen und/oder Pumpzellen. Die Temperaturmesszellen können dabei jeweils einzeln oder zu mehreren in einer Doppelfunktion oder Mehrfachfunktion eingesetzt werden. So kann beispielsweise mindestens eine der Temperaturmesszellen zusätzlich zur Funktion einer Temperaturmessung zu mindestens einer weiteren Funktion verwendet werden. Beispielsweise kann es sich bei dieser mindestens einen weiteren Funktion um die Funktion einer Nernstzelle handeln, beispielsweise einer Nernstzelle, mittels derer eine Nernstspannung erfasst wird und beispielsweise mittels derer auf eine Gaskonzentration und/oder einen Partialdruck einer Gaskomponente in einem Raum, an welchen die Nernstzelle angrenzt, geschlossen wird. Beispielsweise kann dementsprechend die Nernstzelle eine als Sprungsonde ausgestaltete Nernstzelle sein. Alternativ oder zusätzlich kann die mindestens eine weitere Funktion auch die Funktion einer Pumpzelle umfassen. So kann es sich bei der mindestens einen weiteren Funktion beispielsweise um eine Pumpfunktion handeln, beispielsweise eine Funktion, mittels derer gezielt eine Gaskomponente aus einem Raum des Sensorelements entfernt wird, beispielsweise zur Entfernung von Sauerstoff aus einer bestimmten Kammer eines Sensorelements, beispielsweise eines NOₓ-Sensorelements. Auch andere Arten von Pumpzellen können eingesetzt werden, beispielsweise Pumpzellen zur gezielten Messung eines Partialdrucks an Sauerstoff und/oder Stickoxiden. Verschiedene Ausgestaltungen sind möglich.

Die Messung der Temperaturen kann, insbesondere bei Doppelfunktion der Temperaturmesszellen, jedoch auch bei anderen Ausgestaltungen, auf verschiedene Weisen erfasst werden. Beispielsweise können eine, mehrere oder alle der Temperaturen, insbesondere Temperaturen am Ort der Temperaturmesszellen, mittels mindestens eines oder mehrerer der folgenden Verfahren erfasst werden:
- eine Strombeaufschlagung, insbesondere eine aktive Strombeaufschlagung, und/oder eine Spannungsbeaufschlagung mindestens einer, vorzugsweise mehrerer oder sogar aller, Temperaturmesszellen wird moduliert, was ggf. auch überlagert zu einem durch die Messfunktion aktiv aufgeprägtem und/oder intrinsisch entstehenden Strom und/oder einer Spannung erfolgen kann, und aus einem Stromsignal und/oder einem Spannungssignal, ggf. auch überlagert zu einem durch die Messfunktion aktiv aufgeprägtem oder intrinsisch entstehenden Strom und/oder einer Spannung, wird auf einen Innenwiderstand der Temperaturmesszellen geschlossen;
- die Temperaturmesszellen werden mit Strom und/oder Spannung beaufschlagt, was durch äußere Beaufschlagung und/oder auch durch Ausbildung eines intrinsischen Stroms und/oder einer intrinsischen Spannung erfolgen kann, und aus einem Rauschen eines Stromsignals und/oder Spannungssignals der Temperaturmesszellen wird auf eine Temperatur am Ort der Temperaturmesszellen geschlossen.

Unter einer externen Beaufschlagung ist dabei ein Aufbringen der Spannung bzw. des Stroms von außerhalb der jeweils beaufschlagten Zelle zu verstehen, beispielsweise über entsprechende Zuleitungen, Anschlusskontakte oder ähnliche Elemente. Unter einer intrinsischen Beaufschlagung ist dabei zu verstehen, dass die Spannung bzw. der Strom innerhalb der beaufschlagten Zelle selbst erzeugt wird, beispielsweise auf elektrochemische Weise und/oder durch Abbau von überschüssigen Ladungen. Auch eine Erzeugung der Spannung bzw. des Stroms durch andere Elemente des Sensorelements soll unter einer intrinsischen Beaufschlagung subsumierbar sein. Sowohl eine externe als auch eine interne bzw. intrinsische Beaufschlagung ist denkbar. Auch eine Kombination der genannten Möglichkeiten ist denkbar.

Auch eine Kombination der oben genannten Verfahren zur Temperaturbestimmung ist grundsätzlich denkbar. So kann beispielsweise eine der Temperaturmesszellen mittels der erstgenannten Möglichkeit betrieben werden, und mindestens eine weitere mittels der zweiten genannten Möglichkeit.

Wie oben dargestellt, kann das Verfahren insbesondere zur Bestimmung eines Anteils mindestens einer der folgenden Gaskomponenten in dem Gas verwendet werden: Sauerstoff; Stickoxide; Kohlenwasserstoffe; Wasserstoff; Ammoniak. Insbesondere können diese Gaskomponenten selektiv, quantitativ und/oder qualitativ erfasst werden. Neben dem vorgeschlagenen Verfahren in einer oder mehreren der oben dargestellten Varianten wird weiterhin eine Vorrichtung zur Erfassung mindestens einer Eigenschaft eines Gases in einem Messgasraum vorgeschlagen. Die Vorrichtung umfasst mindestens ein Sensorelement mit mindestens einer elektrochemischen Messzelle. Das Sensorelement ist eingerichtet, um mindestens zwei Temperaturen an mindestens zwei verschiedenen Orten des Sensorelements zu erfassen. Dies kann beispielsweise wiederum mittels mindestens einer, vorzugsweise mittels mindestens zweier, Temperaturmesszellen erfolgen oder, alternativ oder zusätzlich, mittels mindestens einer anderen Art von Temperaturmessvorrichtung. Bezüglich der Ausgestaltung des Sensorelements kann auf die obige Beschreibung und die dort dargestellten optionalen Merkmale des Sensorelements verwiesen werden. Weiterhin umfasst die Vorrichtung mindestens eine Steuerung, welche eingerichtet ist, um ein Verfahren in einer oder mehreren der oben dargestellten Ausgestaltungen durchzuführen. Diese Steuerung kann beispielsweise ganz oder teilweise in das mindestens eine Sensorelement integriert sein. Alternativ oder zusätzlich kann diese Steuerung jedoch auch ganz oder teilweise separat von dem mindestens einen Sensorelement ausgestaltet sein und mit dem mindestens einen Sensorelement verbunden sein. Die mindestens eine Steuerung kann beispielsweise zur Durchführung des mindestens einen Verfahrens mindestens eine Datenverarbeitungsvorrichtung und/oder mindestens eine elektronische Schaltung zur Durchführung des Verfahrens umfassen. Beispielsweise kann die Steuerung mindestens einen Microcontroller oder eine andere Art von Datenverarbeitungsvorrichtung, optional mit einem oder mehreren flüchtigen und/oder nicht flüchtigen Speicherbausteinen, umfassen. Auf diese Weise kann beispielsweise das Verfahren zur Bestimmung der mindestens einen Eigenschaft unter Berücksichtigung der Temperatur bzw. der Temperaturen computerimplementiert durchgeführt werden, beispielsweise mittels eines oder mehrerer entsprechender Softwarebausteine. Auch andere Ausgestaltungen sind jedoch grundsätzlich möglich.

Das vorgeschlagene Verfahren und die vorgeschlagene Vorrichtung weisen gegenüber bekannten Verfahren und Vorrichtungen zahlreiche Vorteile auf. Insbesondere ist mit der oben beschriebenen Vorgehensweise aufgrund der gegebenen Temperaturabhängigkeit von Sensorsignalen eine exakte Einstellung und/oder Regelung der Temperatur möglich. Im Gegensatz zum Stand der Technik wird die Temperatur nicht nur an einer Stelle im Sensorelement bestimmt. Dadurch kann auch berücksichtigt werden, dass die eigentliche Gas- oder andere Art der Messung in der Regel nicht in unmittelbarer Nähe des Temperatur-Messpunkts durchgeführt wird. Im Stand der Technik führt dieser Nachteil dazu, dass bei Veränderung beispielsweise einer Wärmeabfuhr (z.B. durch Veränderung der lokalen Gasumströmung, durch eine Temperaturveränderung des Abgases, durch eine Temperaturveränderung der Wandung des Abgasstrangs oder ähnliches) eine nicht korrigierbare Verfälschung des Sensorsignals auftritt. Im Gegensatz zum Stand der Technik wird jedoch bei dem erfindungsgemäßen Verfahren und bei der erfindungsgemäßen Vorrichtung eine erweiterte Temperaturmessung und optional eine erweiterte Temperaturregelung realisiert, welche, gegebenenfalls neben der Temperaturmessung an einer Stelle im Sensorelement, zusätzliche Informationen über die Temperaturverteilung im gesamten Sensorelement generieren kann. Mittels dieser Information und gegebenenfalls einer intelligenten Heizerregelung und/oder nun möglicher Kompensationsrechnungen kann eine deutliche Verbesserung der Genauigkeit des Gassensors realisierbar sein.

Die erfindungsgemäße Vorrichtung und das erfindungsgemäße Verfahren ermöglichen insbesondere den Einsatz als On-Board-Diagnose-Sensor für die kommenden Abgasgesetzgebungen. Hierin können beispielsweise für Stickstoffoxide Grenzwerte vorgeschrieben sein, welche unterhalb der Auflösungsgrenze aktuell erhältlicher Festelektrolytgassensoren, beispielsweise bekannter NOₓ-Sensoren, liegen.

### Kurze Beschreibung der Figuren

Ausführungsbeispiele der Erfindung sind in den Figuren dargestellt und werden in der nachfolgenden Beschreibung näher erläutert.

Es zeigen:
Figur 1 ein Ausführungsbeispiel einer erfindungsgemäßen Vorrichtung;
Figur 2 ein bekanntes Verfahren zur Temperaturkompensation; und
Figuren 3 und 4 erfindungsgemäße Verfahren zur Temperaturkompensation.

### Ausführungsbeispiele

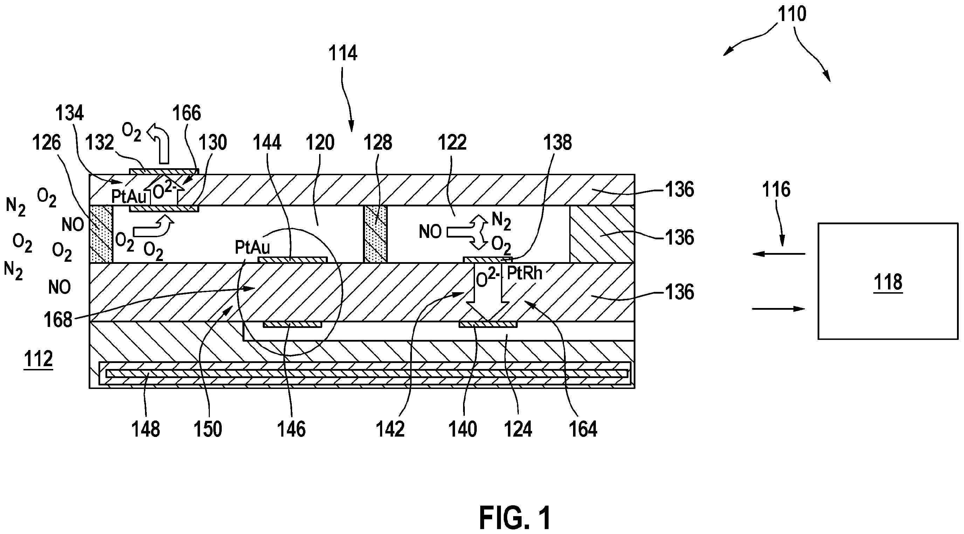

In Figur 1 ist ein Ausführungsbeispiel einer erfindungsgemäßen Vorrichtung 110 zur Erfassung mindestens einer Eigenschaft eines Gases in einem Messgasraum 112 dargestellt. Bei dem Messgasraum 112 kann es sich beispielsweise um einen Abgastrakt einer Brennkraftmaschine handeln und bei dem Gas um ein Abgas der Brennkraftmaschine. Die Vorrichtung 110 umfasst in dem dargestellten Ausführungsbeispiel ein Sensorelement 114 sowie eine mit dem Sensorelement 114 über mindestens eine Schnittstelle 116 verbundene Steuerung 118. Die Steuerung 118 kann jedoch, abweichend von dem dargestellten Ausführungsbeispiel, alternativ oder zusätzlich auch vollständig oder teilweise in das Sensorelement 114 integriert sein.

Das Sensorelement 114 umfasst in dem dargestellten Ausführungsbeispiel eine erste Kammer 120 und eine zweite Kammer 122 sowie eine Luftreferenz 124. Die erste Kammer 120 ist mit dem Messgasraum 112 über eine erste Diffusionsbarriere 126 verbunden, und die zweite Kammer 122 mit der ersten Kammer 120 über eine zweite Diffusionsbarriere 128. Innerhalb der ersten Kammer 120 ist eine innere Sauerstoffpumpelektrode 130 angeordnet, welche aus einem Elektrodenmaterial mit geringer katalytischer Aktivität hergestellt ist, beispielsweise in Form eines Platin-Gold-Cermets. Die innere Sauerstoffpumpelektrode bildet mit einer auf der Außenseite des Sensorelements 114 angeordneten äußeren Sauerstoffpumpelektrode 132 sowie einem die Elektroden 130 und 132 verbindenden Festelektrolyten 136 eine Sauerstoffpumpzelle 134. Weiterhin ist innerhalb der ersten Kammer 120 in dem dargestellten Ausführungsbeispiel eine weitere innere Elektrode 144 vorgesehen, welche mit einer in der Luftreferenz 124 angeordneten Referenzelektrode 146 zusammenwirkt. Weiterhin weist das Sensorelement 114 in dem dargestellten Ausführungsbeispiel eine NO-Pumpelektrode 138 in der zweiten Kammer 122 auf, welche gemeinsam mit einer in der Luftreferenz 124 angeordneten Referenzpumpelektrode und einem diese Elektroden 138, 140 verbindenden Festelektrolyten 136 eine NO-Pumpzelle 142 bildet. Die Elektroden 140 und 146 können beispielsweise auch als eine Elektrode ausgeführt werden, welche beide Funktionen abdeckt. Weiterhin weist das Sensorelement 114 bei dem in Figur 1 dargestellten Ausführungsbeispiel ein Heizelement 148 auf.

Das in Figur 1 dargestellte Sensorelement 114 wird üblicherweise zur Messung kleiner Gaskonzentrationen von Nicht-Sauerstoffgasen, hauptsächlich NOₓ, bei vorhandenem Sauerstoff im Hintergrund eingesetzt. Nach diesem Sensorprinzip, welches beispielsweise aus EP 0 769 693 A1 bekannt ist, wird Sauerstoff in der ersten Kammer 120 sowie gegebenenfalls weiteren Vorkammern zumindest weitgehend aus dem durch die erste Diffusionsbarriere 126 einströmenden Abgas durch Abpumpen über die Sauerstoffpumpzelle 134 sowie gegebenenfalls weitere Sauerstoffpumpzellen entfernt. Somit ist anschließend in der zweiten Kammer 122 idealerweise kein Sauerstoff mehr vorhanden. Die NO-Pumpelektrode 138, welche vorzugsweise, im Gegensatz zu den Elektroden 130 und 144, aus einem katalytisch aktiven Material hergestellt ist (beispielsweise einem Platin-Rhodium-Cermet), zersetzt nun die Stickoxide und pumpt den daraus entstandenen Sauerstoff als lonenstrom beispielsweise zur Referenzpumpelektrode 140. Der dazu korrespondierende sehr kleine elektrische Strom, dessen Stromstärke bei kleinen NOx-Konzentrationen typischerweise im Nanoampere- bis Mikroampere-Bereich liegt, wird gemessen und ist ein Maß für die NO- bzw. NOₓ-Konzentration im Abgas. Für weitere Einzelheiten dieses Messprinzips kann auf die EP 0 769 693 A1 verwiesen werden.

Um eine ausreichende lonenleitfähigkeit des Festelektrolyten zu erreichen, muss das Sensorelement 114 in der Regel auf eine Temperatur zwischen 600 °C und 900 °C aufgeheizt werden. Dies erfolgt mittels des Heizelements 148. Da die Sensorsignale von der Temperatur abhängig sind, ist eine Regelung der Temperatur erforderlich. Herkömmlicherweise wird dies in der Regel durch eine Messung des frequenzabhängigen Widerstands (Elektrolytwiderstand) einer durch die Elektroden 144, 146 und den Festelektrolyten 136 gebildeten Referenzzelle realisiert. Dieser Bereich der Temperaturmessung gemäß dem Stand der Technik ist in Figur 1 symbolisch mit der Bezugsziffer 150 bezeichnet. Aufgrund einer bekannten Temperaturabhängigkeit des Elektrolytwiderstands kann somit auf die in diesem Bereich des Sensorelements 114 auftretende Temperatur geschlossen werden.

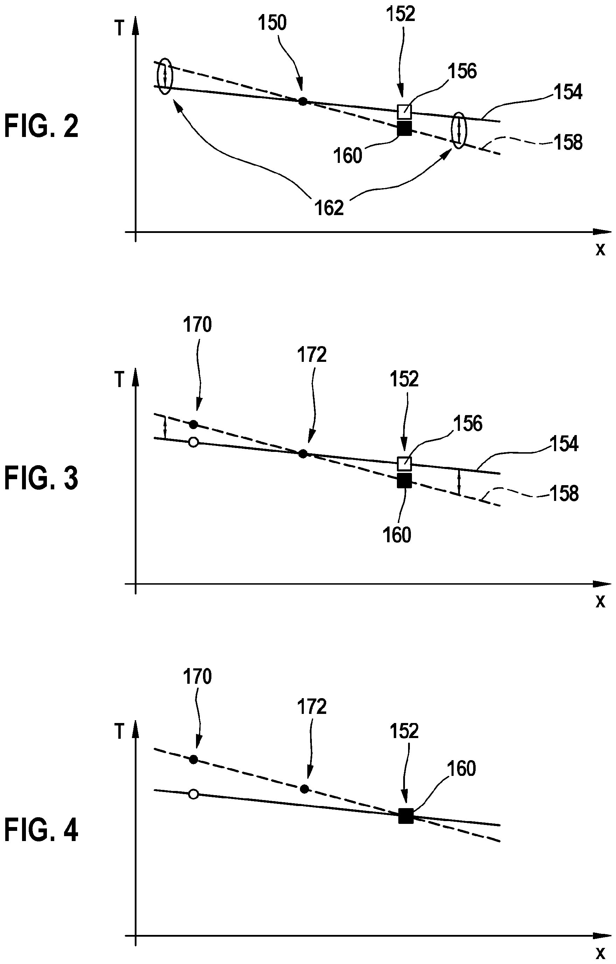

Aufgrund einer gegebenen Temperaturabhängigkeit der Sensorsignale ist die exakte Einstellung und/oder Regelung der Temperatur in vielen Fällen ein wichtiger Einflussfaktor. Im Stand der Technik wird die Temperatur gemäß Figur 1 nur an einer Stelle im Sensorelement 114 bestimmt. Da die eigentliche Messung, beispielsweise die Stickoxid-Messung an der NO-Pumpelektrode 138, jedoch nicht in unmittelbarer Nähe des Messpunkts durchgeführt wird, tritt bei Veränderung der Wärmeabfuhr, beispielsweise durch Veränderung der lokalen Gasumströmung, bei Temperaturveränderung des Abgases, bei Temperaturveränderung der Rohrwand des Abgasstrangs oder ähnlichem, eine Verfälschung des Sensorsignals auf. Dies ist in Figur 2 dargestellt, welche ein herkömmliches Messprinzip mit einer einzelnen Temperaturmessung im Bereich 150 gemäß dem Aufbau in Figur 1 zeigt. In Figur 2 ist die Temperatur T über einem Ort x entlang einer Längserstreckungsachse des Sensorelements 114 aufgetragen. Der Messpunkt der Temperaturmessung ist in Figur 2 wiederum mit 150 bezeichnet, wohingegen der Ort der elektrochemischen Messzelle, in diesem Fall der NO-Pumpzelle 142, in Figur 2 mit der Bezugsziffer 152 bezeichnet ist. Die Temperaturregelung erfolgt dabei typischerweise unter Zugrundelegung eines angenommenen Temperaturgradienten 154. Hieraus wird eine angenommene Temperatur 156 am Ort der Messzelle 142 ermittelt. Durch die oben beschriebenen Effekte einer Veränderung der Wärmeabfuhr, beispielsweise durch Veränderung der lokalen Gasumströmung, Temperaturveränderung des Abgases, Temperaturveränderung der Rohrwand des Abgasstrangs oder ähnliche Effekte, ergibt sich jedoch beispielsweise ein tatsächlicher Temperaturgradient 158. Die Abweichung dieses tatsächlichen Temperaturgradienten 158 vom angenommenen, Standard-Temperaturgradienten 154 ist in Figur 2 mit der Bezugsziffer 162 bezeichnet. Diese Abweichung 162 ist beispielsweise durch unterschiedliche und/oder heterogene Umströmung und/oder einen heterogenen Heizer bedingt. Hieraus ergibt sich eine tatsächliche Temperatur 160, welche von der angenommenen Temperatur 156 abweicht. Insbesondere die Messung des NO-Signals beinhaltet aufgrund des in der Regel sehr kleinen NO-Messstroms einen sehr hohen temperaturbedingten Fehleranteil durch den exponentiell mit der Temperatur variierenden parasitären elektronischen Leckstrom. Da die weitere Temperaturverteilung im Sensorelement oder der Temperaturgradient in der Regel nicht bekannt sind, kann diese Signalverfälschung bei herkömmlichen Verfahren und Vorrichtungen nicht kompensiert werden.

Bei dem erfindungsgemäßen Verfahren hingegen werden Vorrichtungen 110 eingesetzt, welche neben einer Messzelle 164 zwei Temperaturmesszellen 166, 168 aufweisen bzw. bei welchen bereits vorhandene Zellen, beispielsweise Nernstzellen und/oder Pumpzellen, zusätzlich zu der ursprünglichen Funktion, auch als Temperaturmesszellen 166, 168 verwendet werden. Auf diese Weise können an mindestens zwei unterschiedlichen Orten des Sensorelements 114 Temperaturen bestimmt werden. In dem Ausführungsbeispiel gemäß Figur 1 kann beispielsweise die Sauerstoffpumpzelle 134 zusätzlich als Temperaturmesszelle 166 eingesetzt werden, zusätzlich zu der bereits vorhandenen Temperaturmesszelle 168. Alternativ oder zusätzlich kann auch die eigentliche Messzelle 164, in diesem Ausführungsbeispiel die NO-Pumpzelle 142, zusätzlich ganz oder teilweise Bestandteil einer Temperaturmesszelle 166, 168 sein.

Die erfindungsgemäß gewonnene zusätzliche Erkenntnis der Temperaturen an mindestens zwei Temperaturmesspunkten 170, 172 (wobei unter einem Messpunkt sinngemäß auch ein ausgedehnterer Bereich des Sensorelements verstanden werden kann) kann auf verschiedene Weisen genutzt werden. Dies ist exemplarisch in den Figuren 3 und 4 dargestellt, wobei die dort dargestellten erfindungsgemäßen Verfahren auch kombinierbar sind.

So kann beispielsweise, wie in Figur 3 dargestellt, mittels der tatsächlichen Temperaturmessungen an den Messpunkten 170, 172 die tatsächliche Temperatur 160 am Ort 152 der Messzelle 164 durch Ermittlung des tatsächlichen Temperaturgradienten 158 bestimmt werden, beispielsweise durch eine Extrapolation und/oder Interpolation unter Verwendung des tatsächlichen Temperaturgradienten 158. Auch komplexere Extrapolations- und/oder Interpolationsalgorithmen sind denkbar. Diese tatsächliche Temperatur 160 kann beispielsweise eingesetzt werden, um den Pumpstrom der Messzelle 164 in eine NOₓ-Konzentration und/oder einen NOₓ-Partialdruck umzusetzen, und/oder eine Auswertung kann mit entsprechenden Korrekturfaktoren und/oder Korrekturfunktionen versehen werden.

Alternativ oder zusätzlich kann auch eine Regelung auf eine Solltemperatur am Ort 152 der Messzelle 164 erfolgen, was in Figur 4 dargestellt ist. Hierbei kann beispielsweise das Heizelement 148 mittels einer, beispielsweise in der Steuerung 118 enthaltenen Regelung unter Verwendung der Signale der Temperaturmesszellen 166, 168 und der tatsächlichen Temperatur 160 am Ort 152 der Messzelle 164 derart geregelt werden, dass die Messzelle 164 eine Solltemperatur erreicht.

Es wird darauf hingewiesen, dass der dargestellte Aufbau der Vorrichtung 110 lediglich exemplarisch zu verstehen ist und insbesondere das Sensorelement 114 auf viele verschiedene Weisen ausgestaltet werden kann. Insbesondere können beispielsweise auch Sensorelemente 114 eingesetzt werden, bei welchen die zweite Elektrode 140 der NO-Pumpzelle 142 nicht in einer Luftreferenz 124 angeordnet ist, sondern in einer gasdichten Kammer, also einer Kammer, welche entweder vollständig gasdicht abgeschlossen ist oder welche lediglich ein Nachströmen oder Nachdiffundieren von Gas auf einer Zeitskala ermöglicht, die gegenüber Zeitskalen üblicher Messungen der Sensorelemente 114 vernachlässigbar sind. Beispiele derartiger Sensorelemente sind in WO 2010/003826 A1 oder in DE 10 2008 040 314 A1 beschrieben. Die dort dargestellten Sensorelemente 114 und Messverfahren können grundsätzlich auch im Rahmen der vorliegenden Erfindung eingesetzt werden, wobei jedoch erfindungsgemäß Temperaturen an mindestens zwei Temperaturmesspunkten 168, 170 erfasst werden.

Beispielsweise kann das Sensorelement 114 beispielsweise eine gasdichte Kammer (beispielsweise einen Hohlraum oder eine mit einem porösen Material gefüllte Kammer) aufweisen, welche durch den Festelektrolyten 136, beispielsweise YSZ, vom Abgas separiert ist. Zwischen der NO-Pumpelektrode 138 und einer in dieser gasdichten Hohlkammer angeordneten ersten Elektrode kann Sauerstoff in die geschlossene Kammer gepumpt werden. Mindestens eine dritte Elektrode befindet sich in einem Referenzkanal oder einem anderen Referenzgasraum, welcher z.B. mit der äußeren Luftumgebung (mit ca. 21 % Sauerstoff) in Verbindung steht. Je nach Ausführungsform befindet sich optional eine weitere Elektrode in der geschlossenen Kammer. Diese kann, je nach Ausgestaltung, mit der ersten Hohlkammerelektrode zusammengelegt werden bzw. die Funktionalität beider Elektroden kann durch eine einzige Hohlkammerelektrode ersetzt werden, wodurch sich die Elektrodenzahl minimieren lässt. Um eine ausreichende lonenleitfähigkeit des Festelektrolyten zu erreichen, wird das Sensorelement in der Regel durch einen internen Heizer auf die entsprechende Betriebstemperatur eingestellt. Die außenliegende NO-Pumpelektrode zersetzt katalytisch die zu detektierende Gasspezies (z.B. NO und/oder NO₂) und pumpt, korrespondierend dazu, den dabei entstehenden Sauerstoff in die gasdichte Kammer. Dies kann entweder durch einen aktiven Pumpprozess (beispielsweise durch Einprägen einer Spannungs- und/oder Stromfunktion) oder passiv durch Belastung der Pumpzelle über einen Ohmschen Widerstand (so genannte autonome Pumpzelle) realisiert werden. Für die quantitative Bestimmung der zu detektierenden Gasspezies (NOₓ etc.) können auch selektiv pumpende Elektrodenmaterialien verwendet und/oder die Selektivität wird durch einen elektrochemisch unterstützenden Pumpprozess (z.B. charakteristische Zersetzungsspannung sauerstoffhaltiger Gase) unterstützt. Zusätzlich kann, analog zu Figur 1, in mindestens einer vorgelagerten diffusionsbegrenzten Kammer der im Abgas enthaltene Sauerstoff mittels einer selektiven Sauerstoffpumpzelle (mit einer katalytisch geringeren Aktivität, beispielsweise Au-Pt-Elektroden) entfernt werden. Weiterhin kann optional beispielsweise eine kaskadierte Sauerstoffentfernung erfolgen. Die verschiedenen Kammern der Sensorelemente 114 können beispielsweise horizontal oder auch vertikal angeordnet sein. Des Weiteren kann auch die Elektrodenanzahl durch Zusammenlegen mehrerer Elektroden reduziert werden.

Bei dem oben beschriebenen, nicht dargestellten Sensorelement 114 mit einer zusätzlichen, gasdichten Kammer, in welcher mindestens eine der Elektroden der Messzelle 164 angeordnet ist, kann beispielsweise ein im Folgenden beschriebenes Messverfahren angewandt werden, welches grundsätzlich aus dem Stand der Technik bekannt ist, beispielsweise den oben beschriebenen Druckschriften WO 2010/003826 A1 oder DE 10 2008 040 314 A1. So kann in der gasdichten, vom Abgas separierten Kammer durch einen Pumpprozess (beispielsweise aktiv mittels einer Pumpspannung und/oder passiv mittels einer autonomen Pumpzelle) eine beispielsweise mit der NOₓ-Konzentration korrelierende Menge an Sauerstoff gesammelt werden. Vor jedem neuen Zyklus kann diese Kammer leergepumpt werden. Sobald nun ein Akkumulationsprozess beginnt, wird, korreliert mit der NOₓ-Konzentration, Sauerstoff in diese gasdichte Kammer transportiert und in dieser gasdichten Kammer akkumuliert. Das Messprinzip kann sich beispielsweise in zwei Phasen unterteilen. In einer ersten Phase kann beispielsweise ein Leerpumpen der gasdichten Kammer, welche auch als Akkumulationskammer bezeichnet werden kann, durch einen beispielsweise spannungs- oder stromgeführten Pumpprozess über mindestens eine der Hohlkammerelektroden erfolgen, wobei beispielsweise das Abpumpen in einen Luftreferenzkanal hinein erfolgt. Auf diese Weise kann ein definierter Anfangszustand hergestellt werden. Eine zugehörige Messgröße des Kammerzustands kann beispielsweise eine Nernstspannung zwischen einer Hohlkammerelektrode und einer in der Luftreferenz angeordneten Elektrode sein. In einer zweiten Messphase kann dann durch Anlegen einer Pumpspannung und/oder eines Pumpstroms der aus der NO-Zersetzung gewonnene Sauerstoff, welcher mit der NOₓ-Konzentration korreliert, in die Akkumulationskammer gepumpt werden. Folglich erhöht sich die Sauerstoffkonzentration in der Akkumulationskammer. Die Auswertung des Kammerzustands kann beispielsweise durch die Messung der Nernstspannung zwischen einer Hohlkammerelektrode und einer Referenzelektrode, beispielsweise einer Luftreferenzelektrode, erfolgen, welche mit dem Sauerstoffgehalt in der Akkumulationskammer korreliert ist. In diesem Fall wäre die Zelle, welche aus der Hohlkammerelektrode und der Referenzelektrode gebildet wird, die eigentliche Messzelle. Messgröße kann beispielsweise die Zeitdauer Δt sein, welche bis zum Erreichen eines definierten Schwellwerts der - mit steigender Sauerstoffkonzentration sinkenden - Nernstspannung notwendig ist. Mit steigender NOₓ-Konzentration wird die Akkumulationskammer schneller gefüllt, und es resultiert ein schnellerer Abfall der Spannung zwischen Hohlkammerelektrode und Luftreferenzelektrode. Auch andere Auswerteverfahren zur Auswertung des Kammerzustands sind jedoch grundsätzlich möglich, beispielsweise Verfahren, bei welchen die Nernstspannung oder deren Verlauf auf andere Weise ausgewertet wird.

Diese alternativen Messverfahren und alternativen Aufbauten möglicher Sensorelemente 114 sollen lediglich exemplarisch zeigen, dass das erfindungsgemäße Verfahren und die erfindungsgemäße Vorrichtung 110 auf zahlreiche bekannte Vorrichtungen und Verfahren übertragbar sind. Auch die in Figur 1 dargestellte Anordnung des Sensorelements 114 ist auf verschiedene Weisen modifizierbar. Beispielsweise kann die äußere Sauerstoffpumpelektrode 132 von der Fläche her vergrößert werden, und die innere Elektrode 144 kann nach oben, auf die der äußeren Sauerstoffpumpelektrode 132 gegenüberliegende Seite des Festelektrolyten 136 verlegt werden, so dass die beiden Elektroden 130, 144 an der Decke der ersten Kammer 120 angeordnet sind. Alternativ oder zusätzlich können weitere Elektroden innerhalb einer oder mehrerer der Kammern 120, 122 angeordnet werden. Wiederum alternativ oder zusätzlich können die Temperaturmesszellen 166, 168, wobei auch weitere Temperaturmesszellen vorgesehen sein können, auch auf andere Weise ausgestaltet werden, beispielsweise durch Zusammenfassen entfernt angeordneter Elektroden. Beispielsweise kann die innere Sauerstoffpumpelektrode 130 mit der Referenzpumpelektrode 140 zu einer Temperaturmesszelle zusammengefasst werden, da auch diese Elektroden 130, 140 über den Festelektrolyten 136 miteinander verbunden sind.

Bei dem erfindungsgemäßen Verfahren können eine oder mehrere Zellen in einer Doppelfunktion, neben der ursprünglich geplanten Funktion, auch als Temperaturmesszellen 166, 168 verwendet werden. Beispielsweise können hierfür eine oder mehrere Zellen des Sensorelements 114 herangezogen werden, welche bezüglich des Sensorsignals passiv sind, d.h. welche nicht aktiv durch einen Aufprägung von Strom und/oder Spannung betrieben werden, sondern nur passiv eine Messfunktion (z.B. eine passive Spannungsmessung) realisieren oder keine direkte Messfunktion alleinig darstellen. Beispielsweise kann eine Temperaturmessung auch über eine Temperaturabhängigkeit des Elektrolytwiderstands Rᵢ an aktiven Pumpzellen erfolgen. Beispielsweise kann die eine Messung an einer der Sauerstoffpumpelektroden 130, 132 und/oder an der Sauerstoffpumpzelle 134 erfolgen. Hierzu kann beispielsweise entweder der geregelten Pumpspannung ein Signal zur Temperaturmessung überlagert werden. Beispielsweise können der geregelten Pumpspannung eine sinusförmige und/oder eine dreieckförmige und/oder eine auf andere Weise ausgestaltete Sequenz, beispielsweise eine periodische Sequenz, und/oder Pulse, überlagert werden, welche im charakteristischen Bereich der nur durch den Elektrolytwiderstand bestimmten Zellimpedanz oder anderer temperaturabhängiger Impedanzen der Zelle liegen. Dies kann beispielsweise an der Sauerstoffpumpzelle 134 erfolgen. Um eine Ausregelung dieser überlagerten Signalanteile durch den in der Regel eingesetzten Pumpspannungs- oder Pumpstromregler zu verhindern, kann die zugehörige Regelgröße vor Eingang in den Regler durch einen Tiefpass gefiltert werden. Die Bestimmung des Innenwiderstands Rᵢ kann dann aus dem ebenfalls geeignet gefilterten (z.B. hochpassgefiltert) Stromsignal erfolgen, welches der gezielten Anregung zuzuordnen ist. Aufgrund der hohen Frequenz des überlagerten Kleinsignals wird der eigentliche Pumpvorgang der Zelle nicht relevant beeinflusst und läuft praktisch unabhängig weiter. Diese Vorgehensweise der Temperaturermittlung ist ebenfalls bei Verwendung einer digitalen Betriebsweise der Pumpzelle möglich, beispielsweise indem eine Pulsaufprägung einer digitalen Betriebsweise ausgenutzt wird. Weiterhin ist, je nach Eigenschaften der Vorrichtung 110, eine Bestimmung des Innenwiderstands Rᵢ ohne gezielte Aufprägung eines Signals alleinig aus den überlagerten Rauschanteilen der Pumpspannung und/oder des Pumpstromes, beispielsweise aufgrund Stellwertveränderungen durch den Regler, Sauerstoffschwankungen im Abgas oder sonstige Rauschquellen, und des zugehörigen Pumpstroms und/oder Pumpspannung bei geeigneter Filterung bzw. komplexeren Auswertemethoden möglich.

Mittels des beschriebenen Verfahrens können beispielsweise somit auch, alternativ oder zusätzlich zur Verwendung mindestens einer Nernstzelle zur Temperaturmessung, auch mindestens eine, mehrere oder sogar alle Pumpzellen und/oder Nernstzellen und/oder Kombinationen aus bisher nicht als eigenständige Zellen betrachtete Kombinationen aus zwei Elektroden und dem Festelektrolyts des Sensorelements 114 zur Temperaturermittlung als Temperaturmesszellen 166, 168 verwendet werden. Beispielsweise kann im erfindungsgemäßen Verfahren durch eine kombinierte Messung der Temperatur an mehreren Pump- und/oder Nernstzellen und/oder Kombinationen aus bisher nicht als eigenständige Zellen betrachtete Kombinationen aus zwei Elektroden und dem Festelektrolyts, beispielsweise an den Temperaturmesszellen 166, 168 in Figur 1, die Temperaturverteilung über das Sensorelement 114 bestimmt werden. Im Gegensatz hierzu erfolgt, wie oben dargestellt, im Stand der Technik in der Regel nur eine Temperaturmessung an einer einzelnen Nernstzelle, d.h. nur einem Temperaturmesspunkt im gesamten Sensorelement. So können die Temperaturen an zwei oder mehr Temperaturmesspunkten 170, 172 bestimmt und beispielsweise ausgehend vom idealen Verlauf des Temperaturgradienten, mittels der zwei oder mehr gemessenen Temperaturen der veränderte aktuelle, tatsächliche Temperaturgradient bzw. die ggf. komplexer verlaufende Temperaturverteilung 158 bestimmt werden.

Somit ist in einer ersten guten Näherung die Abweichung der aktuellen Temperatur von der Solltemperatur an der Messzelle 164, beispielsweise der NO-Pumpzelle 142, bestimmbar. Bei nun bekannter NO-Messzellentemperatur kann der Fehler auf mehrere Weisen, die auch kombinierbar sind, korrigiert werden. So kann beispielsweise, wie oben dargestellt, die Solltemperatur an der Messzelle 164 ausgeregelt werden. Dabei kann beispielsweise als Regelgröße die aus den zwei oder mehr Temperaturmesspunkten 170, 172 berechnete Temperatur an der Messzelle 164 verwendet werden. Diese Variante ist insbesondere vorteilhaft, wenn die Temperaturempfindlichkeit des NO-Signals wesentlich kritischer ist als die resultierende Temperaturabweichung an den Sauerstoffpumpelektroden 130, 132.

Alternativ oder zusätzlich kann auch eine Signalkompensation erfolgen. Aufgrund der ermittelten Abweichung der Temperatur an der Messzelle 164 kann das zugehörige Signal, beispielsweise ein NOₓ-Signal, insbesondere ein Strom bei Verwendung des konventionellen Doppelkammergrenzstromverfahrens, entsprechend der bekannten Eigenschaften der Temperaturabhängigkeit korrigiert werden, beispielsweise mittels eines Offsets und/oder einer Kennliniensteigung und/oder komplexeren Kompensationsalgorithmen.

Wiederum alternativ oder zusätzlich kann auch die Heizerversorgung des Heizelements 148 auf einen Kompromisstemperaturwert geregelt werden. Dieser Kompromisstemperaturwert kann eingerichtet sein, um für mehrere, vorzugsweise alle Funktionszellen, die für die Erfassung der mindestens einen Eigenschaft des Gases in dem Messgasraum 112 eingesetzt werden, eine moderate Abweichung von einer Solltemperatur zu ermöglichen. Auf diese Weise können beispielsweise auch Querempfindlichkeiten unterschiedlicher Zellen gewichtet und somit berücksichtigt werden.

Bei dem erfindungsgemäß vorgeschlagenen Verfahren werden somit Temperaturen an mindestens zwei Temperaturmesspunkten 170, 172 erfasst. Es ist jedoch, alternativ oder zusätzlich, eine auch separat realisierbare Ausgestaltung denkbar, bei welcher, ausgehend von dem oben beschriebenen Sensorelement in einer oder mehreren der oben beschriebenen Varianten, eine Ermittlung einer mittleren Temperatur über einen größeren Bereich des Sensorelements 114 erfolgt. Wiederum kann auch eine Regelung auf diese mittlere Temperatur erfolgen.

Hiermit kann eine extreme Verfälschung und/oder Abweichung der Temperatur an einer der an unterschiedlichen Positionen im Sensorelement befindlichen Zellen bei Regelung auf nur eine lokale Zelle verhindert werden. Beispielsweise kann, wie oben ausgeführt, die innere Sauerstoffpumpelektrode 130 über den Festelektrolyten 136 mit der Referenzpumpelektrode 140 zu einer Temperaturmesszelle zusammengefasst werden. Der zur Rᵢ-Messung zugehörige Leitfähigkeitspfad läuft dann durch den Festelektrolyten 136 zwischen diesen Elektroden 130, 140, durch einen großen Teil des Sensorelements 114. Auch andere Ausgestaltungen sind möglich. Bei Regelung auf diesen Innenwiderstand wird somit eine mittlere Temperatur verwendet, und eine extreme lokale Temperaturabweichung über die Längsachse des Sensorelements 114 wird vermieden.

In einer weiteren möglichen Ausgestaltung des erfindungsgemäßen Verfahrens und der erfindungsgemäßen Vorrichtung 110 kann die Messzelle 164 in einer Mehrfachfunktion auch als eine der Temperaturmesszellen 166, 168 verwendet werden und/oder kann ganz oder teilweise bauteilidentisch mit einer Temperaturmesszelle sein. So kann beispielsweise die Temperatur direkt an der Messzelle 164 erfasst werden, beispielsweise der NO-Pumpzelle 142. Dies kann beispielsweise, auch unabhängig von der Verwendung mehrerer Temperaturmesspunkte, durch Auswertung eines Rauschens der Messzelle 164 und/oder durch Aufprägen eines Signals auf die Messzelle 164, beispielsweise die NO-Pumpzelle 142, erfolgen, wobei auf die oben beschriebenen Vorgehensweisen verwiesen werden kann. Alternativ kann dieses Prinzip auch mit mehreren Temperaturmesspunkten gemäß der obigen Beschreibung und gemäß der vorliegenden Erfindung kombiniert werden. Zur Nutzung der Messzelle 164 in Mehrfachfunktion, also zusätzlich zur Erfassung der mindestens einen Eigenschaft auch zur Messung einer Temperatur, kann beispielsweise wiederum eine Aufprägung eines überlagerten Kleinsignals erfolgen, gemäß der obigen Beschreibung, gegebenenfalls auch durch Verwendung einer digitalen Betriebsweise, oder es kann, alternativ oder zusätzlich, auch eine Schätzung des Innenwiderstands aufgrund von Rauschanteilen in der Pumpspannung und/oder dem zugehörigen Pumpstrom erfolgen. Letztere Vorgehensweise der Bestimmung aus den Rauschanteilen beinhaltet den signifikanten Vorteil, dass die sehr empfindliche Messung des NO-Zersetzungsstroms, welcher typischerweise im Nanoampere- bis Mikroampere-Bereich liegt, nicht durch zusätzliche Umpolarisierungsvorgänge gestört und somit die Signalqualität verschlechtert wird.

Eine weitere Ausführungsform des erfindungsgemäßen Verfahrens besteht in der Verwendung eines Sensorelements 114 mit gasdicht abgeschlossener Hohlkammer, gemäß der obigen Beschreibung und gemäß dem oben zitierten Stand der Technik. Beispielsweise kann das Verfahren auf einen integrativen keramischen NOₓ-Sensor anwendbar sein. Auch hier kann wieder die eigentliche Messzelle 164 oder eine oder mehrere der Messzellen 164 (falls mehrere vorhanden sind) in Mehrfachfunktion auch zu einer Temperaturmessung herangezogen werden. Beispielsweise kann die NO-Pumpelektrode mit einer in der gasdichten Kammer angeordneten Hohlkammerelektrode zu einer Temperaturmesszelle zusammenwirken. Alternativ oder zusätzlich kann auch eine Messzelle, welche aus einer Hohlkammerelektrode in dem gasdichten Hohlraum und einer Referenzelektrode, beispielsweise in einer Luftreferenz, besteht, in Doppelfunktion als Messzelle und als Temperaturmesszelle verwendet werden. Wiederum alternativ oder zusätzlich kann auch eine aus zwei oder mehr in der gasdichten Kammer angeordneten Hohlkammerelektroden gebildete Zelle als Temperaturmesszelle eingesetzt werden. Beispielsweise kann eine Ermittlung des Innenwiderstands aus einem Rauschen einer Zellspannung und/oder eines Zellstroms zwischen zwei oder mehreren in der geschlossenen Akkumulationskammer angeordneten Hohlkammerelektroden erfolgen. Dies ermöglicht idealerweise die Kenntnis der aktuellen Hohlkammertemperatur, welche sowohl bei Abweichungen für eine Kompensationsrechnung als auch zur gezielten Regelung der Sensortemperatur in diesem Bereich verwendet werden kann. Ebenfalls können, einzeln oder zu mehreren, sämtliche andere Zellen der Sensorelemente 114 zur Temperaturmessung verwendet werden. Beispielsweise kann auch die NO-Pumpelektrode mit einer Luftreferenzelektrode zu einer Temperaturmesszelle zusammengefasst werden. Aufgrund der Mehrphasigkeit des integrativen Messprinzips können diese Messungen, je nach Eigenschaften und/oder Empfindlichkeit, sowohl gezielt in der Akkumulationsphase als auch in der Initialisierungsphase (Kammerentleerung) durchgeführt werden.

In einer weiteren Ausgestaltung des erfindungsgemäßen Verfahrens kann die Vorrichtung 110 zwei oder mehr Heizelemente 148 umfassen. So kann das erfindungsgemäße Verfahren durch den Einsatz von mindestens zwei Heizelementen 148 innerhalb des Sensorelements 114 nicht nur zur Signalkorrektur, sondern weitgehend sogar zur Einstellung und Regelung der optimalen Temperaturverteilung über das gesamte Sensorelement 114 und/oder einen größeren Bereich des Sensorelements 114 verwendet werden.

Die oben beschriebene Vorrichtung 110 und das beschriebene Verfahren lassen sich auf zahlreiche bereits bekannte oder auch neuartige Sensorkonzepte einsetzen. Beispielsweise lassen sich diese, wie ausgeführt, auf konventionelle Grenzstrom-NOₓ-Sensoren gemäß Figur 1 und/oder integrative NOₓ-Sensoren anwenden. Auch eine Anwendung auf andere Arten von Gassensoren, beispielsweise Lambdasonden, ist möglich, sowohl auf Grenzstromsonden als auch auf Sprungsonden oder kombinierte Sonden. Das vorgeschlagene Verfahren und die vorgeschlagene Vorrichtung 110 sind insbesondere zum Einsatz als On-Board-Diagnose-Sensor (OBD-Sensor) für die Funktionsüberprüfung und die Adaption eines auf selektiver katalytischer Reduktion basierenden Katalysators (SCR-Katalysator) geeignet. Des Weiteren können grundsätzlich auch andere Arten von Sensoren, beispielsweise Sensoren zur Erfassung anderer Arten von Gasspezies, erfindungsgemäß modifiziert werden oder erfindungsgemäß verwendet werden.

## Patentansprüche

1. Verfahren zur Erfassung mindestens einer Eigenschaft eines Gases in einem Messgasraum (112), insbesondere zur Erfassung mindestens einer Gaskomponente des Gases, wobei die mindestens eine Eigenschaft unter Verwendung mindestens einer elektrochemischen Messzelle (164) eines Sensorelements (114) bestimmt wird, wobei Temperaturen an mindestens zwei verschiedenen Orten des Sensorelements (114) erfasst und bei der Bestimmung der mindestens einen Eigenschaft verwendet werden, **dadurch gekennzeichnet dass** das Sensorelement (114) zwei oder mehr Temperaturmesszellen (166, 168) aufweist, die jeweils mindestens zwei Elektroden und einen die Elektroden verbindenden Festelektrolyten (136) aufweisen, und dass aus einem Innenwiderstand der Temperaturmesszellen (166, 168) auf eine Temperatur am Ort der jeweiligen Temperaturmesszelle (166, 168) geschlossen wird.

2. Verfahren nach dem vorhergehenden Anspruch, wobei aus den Temperaturen an den mindestens zwei verschiedenen Orten auf eine Temperatur am Ort der Messzelle (164) geschlossen wird.

3. Verfahren nach dem vorhergehenden Anspruch, wobei mittels einer Extrapolation und/oder Interpolation auf die Temperatur am Ort der Messzelle (164) geschlossen wird.

4. Verfahren nach einem der beiden vorhergehenden Ansprüche, wobei mittels mindestens eines Heizelements (148) und der Temperatur am Ort der Messzelle (164) eine Regelung auf eine Solltemperatur am Ort der Messzelle (164) erfolgt.

5. Verfahren nach einem der vorhergehenden Ansprüche, wobei mittels der Messzelle (164) mindestens eine Messgröße erfasst wird, wobei die mindestens eine Eigenschaft aus der Messgröße unter Berücksichtigung einer Korrektur bestimmt wird, wobei die Korrektur abhängig ist von den Temperaturen, insbesondere am Ort der Temperaturmesszellen (166, 168) und/oder von einer Temperatur am Ort der Messzelle (164).

6. Verfahren nach Anspruch 4, wobei mittels des mindestens einen Heizelements (148) und den Temperaturen eine Regelung mindestens einer Temperatur des Sensorelements (114) auf mindestens einen Kompromisstemperaturwert erfolgt, wobei der Kompromisstemperaturwert derart gewählt wird, dass für mehrere Orte des Sensorelements (114), vorzugsweise für mehrere Funktionszellen des Sensorelements (114), eine vorgegebene Abweichung von jeweiligen Solltemperaturen nicht überschritten wird.

7. Verfahren nach einem der vorhergehenden Ansprüche, wobei die Temperaturmesszellen (166, 168) ausgewählt sind aus Nernstzellen und Pumpzellen.

8. Verfahren nach einem der vorhergehenden Ansprüche, wobei mindestens eine der Temperaturmesszellen (166, 168) zusätzlich zur Funktion einer Temperaturmessung zu mindestens einer weiteren Funktion verwendet wird, insbesondere als Nernstzelle und/oder als Pumpzelle (134).

9. Verfahren nach einem der vorhergehenden Ansprüche, wobei Temperaturen am Ort der Temperaturmesszellen (166, 168) mittels eines oder mehrerer der folgenden Verfahren erfasst werden:
- eine Strombeaufschlagung und/oder Spannungsbeaufschlagung der Temperaturmesszellen (166, 168) wird moduliert und aus einem Stromsignal und/oder Spannungssignal auf einen Innenwiderstand der Temperaturmesszellen (166, 168) geschlossen;
- die Temperaturmesszellen (166, 168) werden mit Strom und/oder Spannung beaufschlagt und/oder es ergibt sich intrinsisch eine Spannung oder Strom ohne äußere Aufprägung, und aus einem Rauschen eines Stromsignals und/oder Spannungssignals der Temperaturmesszellen (166, 168) wird auf eine Temperatur am Ort der Temperaturmesszellen (166, 168) geschlossen.

10. Verfahren nach einem der vorhergehenden Ansprüche, wobei das Verfahren zur Bestimmung eines Anteils mindestens einer der folgenden Gaskomponenten in dem Gas verwendet wird: Sauerstoff; Stickoxide; Kohlenwasserstoffe; Wasserstoff; Ammoniak.

11. Vorrichtung (110) zur Erfassung mindestens einer Eigenschaft eines Gases in einem Messgasraum (112), umfassend mindestens ein Sensorelement (114) mit mindestens einer elektrochemischen Messzelle (164), wobei das Sensorelement eingerichtet ist, um Temperaturen an mindestens zwei verschiedenen Orten des Sensorelements (114) zu erfassen, mittels mindestens einer Temperaturmesszelle (166, 168), wobei das Sensorelement (114) weiterhin mindestens eine Steuerung (118) umfasst, wobei die Steuerung (118) eingerichtet ist, um ein Verfahren nach einem der vorhergehenden Ansprüche durchzuführen.

## Claims

1. Method for detecting at least one property of a gas in a measuring gas chamber (112), in particular for detecting at least one gas component of the gas, wherein the at least one property is determined using at least one electrochemical measuring cell (164) of a sensor element (114), wherein temperatures are detected at at least two different locations of the sensor element (114) and are used in the determination of the at least one property, **characterized in that** the sensor element (114) has two or more temperature measuring cells (166, 168), which have in each case at least two electrodes and a solid electrolyte (136) connecting the electrodes, and **in that** a temperature at the location of the respective temperature measuring cell (166, 168) is deduced from an internal resistance of the temperature measuring cells (166, 168).

2. Method according to the preceding claim, wherein a temperature at the location of the measuring cell (164) is deduced from the temperatures at the at least two different locations.

3. Method according to the preceding claim, wherein the temperature at the location of the measuring cell (164) is deduced by means of an extrapolation and/or interpolation.

4. Method according to one of the two preceding claims, wherein a closed-loop control to a setpoint temperature at the location of the measuring cell (164) is performed by means of at least one heating element (148) and the temperature at the location of the measuring cell (164).

5. Method according to one of the preceding claims, wherein at least one measured variable is detected by means of the measuring cell (164), wherein the at least one property is determined from the measured variable while taking a correction into account, wherein the correction is dependent on the temperatures, in particular at the location of the temperature measuring cells (166, 168), and/or on a temperature at the location of the measuring cell (164).

6. Method according to Claim 4, wherein a closed-loop control of at least one temperature of the sensor element (114) to at least one compromise temperature value is performed by means of the at least one heating element (148) and the temperatures, wherein the compromise temperature value is selected such that for multiple locations of the sensor element (114), preferably for multiple functional cells of the sensor element (114), a predefined deviation from respective setpoint temperatures is not exceeded.

7. Method according to one of the preceding claims, wherein the temperature measuring cells (166, 168) are selected from Nernst cells and pumping cells.

8. Method according to one of the preceding claims, wherein at least one of the temperature measuring cells (166, 168) is used in addition to the function of a temperature measurement for at least one further function, in particular as a Nernst cell and/or as a pumping cell (134).

9. Method according to one of the preceding claims, wherein temperatures at the location of the temperature measuring cells (166, 168) are detected by means of one or more of the following methods:
- an application of current and/or an application of voltage to the temperature measuring cells (166, 168) is modulated and an internal resistance of the temperature measuring cells (166, 168) is deduced from a current signal and/or voltage signal;
- current and/or voltage is applied to the temperature measuring cells (166, 168) and/or a voltage or current is intrinsically present, without being externally impressed, and a temperature at the location of the temperature measuring cells (166, 168) is deduced from a noise of a current signal and/or voltage signal of the temperature measuring cells (166, 168).

10. Method according to one of the preceding claims, wherein the method is used for determining a proportion of at least one of the following gas components in the gas: oxygen; nitrogen oxides; hydrocarbons; hydrogen; ammonia.

11. Apparatus (110) for detecting at least one property of a gas in a measuring gas chamber (112), comprising at least one sensor element (114) with at least one electrochemical measuring cell (164), wherein the sensor element is configured to detect temperatures at at least two different locations of the sensor element (114), by means of at least one temperature measuring cell (166, 168), wherein the sensor element (114) also comprises at least one controller (118), wherein the controller (118) is configured to carry out a method according to one of the preceding claims.

## Revendications

1. Procédé permettant de détecter au moins une propriété d'un gaz dans une chambre à gaz de mesure (112), en particulier de détecter au moins une composante gazeuse du gaz, ladite au moins une propriété étant déterminée en utilisant au moins une cellule de mesure électrochimique (164) d'un élément de capteur (114), dans lequel les températures à au moins deux endroits différents de l'élément de capteur (114) sont détectées et utilisées lors de la détermination de ladite au moins une propriété, **caractérisé en ce que** l'élément de capteur (114) présente deux ou plusieurs cellules de mesure de température (166, 168) qui présentent chacune au moins deux électrodes et un électrolyte solide (136) reliant les électrodes, et **en ce qu'**une résistance interne des cellules de mesure de température (166, 168) permet de déduire une température à l'endroit de la cellule de mesure de température (166, 168) respective.

2. Procédé selon la revendication précédente, dans lequel les températures auxdits au moins deux endroits différents permettent de déduire une température à l'endroit de la cellule de mesure (164).

3. Procédé selon la revendication précédente, dans lequel une extrapolation et/ou une interpolation permettent de déduire la température à l'endroit de la cellule de mesure (164).

4. Procédé selon l'une des deux revendications précédentes, dans lequel une régulation sur une température de consigne à l'endroit de la cellule de mesure (164) est effectuée au moyen d'au moins un élément chauffant (148) et de la température à l'endroit de la cellule de mesure (164).

5. Procédé selon l'une quelconque des revendications précédentes, dans lequel la cellule de mesure (164) permet de détecter au moins une grandeur de mesure, ladite au moins une propriété étant déterminée à partir de la grandeur de mesure en tenant compte d'une correction, la correction dépendant des températures, en particulier à l'endroit des cellules de mesure de température (166, 168), et/ou d'une température à l'endroit de la cellule de mesure (164).

6. Procédé selon la revendication 4, dans lequel une régulation d'au moins une température de l'élément de capteur (114) sur au moins une valeur de température intermédiaire est effectuée au moyen de l'au moins un élément chauffant (148) et des températures,
la valeur de température intermédiaire étant sélectionnée de telle sorte que pour plusieurs endroits de l'élément de capteur (114), de préférence pour plusieurs cellules fonctionnelles de l'élément de capteur (114), un écart prédéfini par rapport à des températures de consigne respectives n'est pas dépassé.

7. Procédé selon l'une quelconque des revendications précédentes, dans lequel les cellules de mesure de température (166, 168) sont sélectionnées parmi des cellules de Nernst et des cellules de pompage.

8. Procédé selon l'une quelconque des revendications précédentes, dans lequel au moins l'une des cellules de mesure de température (166, 168) est utilisée, en plus de la fonction d'une mesure de température, pour au moins une autre fonction, en particulier en tant que cellule de Nernst et/ou cellule de pompage (134).

9. Procédé selon l'une quelconque des revendications précédentes, dans lequel les températures à l'endroit des cellules de mesure de température (166, 168) sont détectées au moyen d'un ou de plusieurs des procédés suivants :
- une alimentation en courant et/ou une alimentation en tension des cellules de mesure de température (166, 168) sont modulées, et une résistance interne des cellules de mesure de température (166, 168) est déduite à partir d'un signal de courant et/ou d'un signal de tension;
- les cellules de mesure de température (166, 168) sont alimentées en courant et/ou en tension, et/ou une tension ou un courant résulte de manière intrinsèque sans application extérieure, et une température à l'endroit des cellules de mesure de température (166, 168) est déduite à partir d'un bruit d'un signal de courant et/ou d'un signal de tension des cellules de mesure de température (166, 168).

10. Procédé selon l'une quelconque des revendications précédentes, dans lequel le procédé est utilisé pour déterminer un pourcentage d'au moins l'une des composantes gazeuses suivantes : de l'oxygène ; des oxydes d'azote ; des hydrocarbures ; de l'hydrogène ; de l'ammoniac.

11. Dispositif (110) permettant de détecter au moins une propriété d'un gaz dans une chambre à gaz de mesure (112), comprenant au moins un élément de capteur (114) doté d'au moins une cellule de mesure électrochimique (164), l'élément de capteur étant aménagé pour détecter des températures à au moins deux endroits différents de l'élément de capteur (114) au moyen d'au moins une cellule de mesure de température (166, 168), l'élément de capteur (114) comprenant en outre une commande (118), la commande (118) étant aménagée pour effectuer un procédé selon l'une quelconque des revendications précédentes.
